# EUROPÄISCHE PATENTSCHRIFT

(11) **EP 4 046 764 B1**
(45) Veröffentlichungstag und Bekanntmachung des Hinweises auf die Patenterteilung: **14.08.2024**
(21) Anmeldenummer: 22153171.8
(22) Anmeldetag: 25.01.2022
(51) Int. Cl.: B27M 1/08, B27M 3/18, B27M 3/00, F16B 12/04

(54) **FÜGEEINRICHTUNG SOWIE VERFAHREN**
JOINING DEVICE AND METHOD
DISPOSITIF D'ASSEMBLAGE, AINSI QUE PROCÉDÉ

(30) Priorität: 27.01.2021 DE 102021101750
(43) Veröffentlichungstag der Anmeldung: 24.08.2022
(73) Patentinhaber: HOMAG Automation GmbH, 09638 Lichtenberg (DE)
(72) Erfinder: Spörke, Sebastian, 09638 Lichtenberg (DE); Runge, Alexander, 09638 Lichtenberg (DE)
(74) Vertreter: Hoffmann Eitle

(56) Entgegenhaltungen:
- DE-A1- 102006 036 193
- DE-A1- 102016 007 010
- DE-A1- 19 637 178
- DE-B4- 102013 001 472
- DE-B4- 102013 001 472
- DE-C1- 19 652 756
- DE-U1- 29 924 143

## Beschreibung

### Technisches Gebiet

Die Erfindung betrifft eine Fügeeinrichtung zum Fügen einer Baugruppe, insbesondere eines mehrere Bauelemente umfassenden Möbelstücks, sowie ein Verfahren zum Fügen einer Baugruppe. Eine solche Fügeeinrichtung kommt insbesondere im Bereich der holzverarbeitenden Industrie, beispielsweise der Möbelfertigung, zum Einsatz.

### Stand der Technik

Zur Möbelfertigung sind sogenannte Fügepressen bekannt, mit denen Bauelemente von Möbelstücken zusammengefügt werden können. Beispielsweise können mit einer solchen Fügepresse Regale, Schränke oder Schubladen gefertigt werden, wobei die zu fügenden Bauelemente hierbei Seitenwände, Böden, Deckplatten oder Ähnliches eines solchen Möbelstücks sind.

Obwohl es Anforderungen gibt, den Automatisierungsgrad solcher Fügepressen weiter zu steigern, führt dies letztlich dazu, dass die Fügepressen auf bestimmte Möbelkonstruktionen angepasst und speziell für ein bestimmtes Möbelstück ausgelegt werden. Bei Änderung des zu fertigenden Möbelstücks sind, sofern dies möglich ist, umfangreiche Umbaumaßnahmen erforderlich, sodass entsprechend hohe Nebenzeiten die Produktivität verringern.

### Darstellung der Erfindung

Der Erfindung liegt die Aufgabe zugrunde, eine Fügeeinrichtung bereitzustellen, die bei hoher Produktivität eine erhöhte Flexibilität ermöglicht.

Anspruch 1 und 10 stellen eine entsprechende Fügeeinrichtunc und das dazugehörige Verfahren bereit. Weitere bevorzugte Ausführungsformen sind in den abhängigen Ansprüchen aufgeführt Die DE10 2013 00147284 offenbart relevanten Stand der Technik. Die DE19652756C1 offenbart die Präambel des Hauptanspruches.

Es wird eine Fügeeinrichtung bereitgestellt, die aufweist: eine Fügepresse, die eingerichtet ist, in einem Bearbeitungsbereich Bauelemente zu einer Baugruppe zu fügen, wobei die Fügepresse eine erste Seite sowie eine zweite Seite aufweist, wobei die erste Seite und die zweite Seite unterschiedliche Seiten der Fügepresse sind. Insbesondere können die erste und zweite Seite der Fügepresse entgegengesetzte Seiten der Fügepresse sein.

Die Fügeeinrichtung umfasst ferner eine erste Handhabungseinrichtung, die eingerichtet ist, zumindest ein Bauelement zur ersten Seite der Fügepresse zu bewegen, und eine zweite Handhabungseinrichtung, die eingerichtet ist, zumindest ein weiteres Bauelement zur zweiten Seite der Fügepresse zum Bearbeitungsbereich der Fügepresse zu bewegen.

Die Erfindung bietet die Möglichkeit, Baugruppen, wie beispielsweise Möbelstücke, mit hoher Leistung und hoher Flexibilität zu fertigen. Speziell bietet der Einsatz der Handhabungseinrichtungen den Vorteil, dass Bauelemente schnell und/oder lagerichtig an die Fügepresse übergeben werden können. Ferner eröffnet sich die Möglichkeit, vereinzelte Bauelemente, wie beispielsweise Sonderteile, mit der Handhabungseinrichtung während des Fügevorgangs zu halten. Somit kann auch die Komplexität der Fügepresse selbst reduziert werden, denn Halteeinrichtungen der Fügepresse müssen nicht alle verschiedenen Bauelemente aufnehmen und halten können.

Die Fügeeinrichtung kann beispielsweise zum Fügen von Möbelstücken, wie Möbel-Korpussen, Küchenschränken oder Ähnlichem, eingesetzt werden. Der Vorteil der Fügeeinrichtung liegt dabei in einer flexiblen Beschickung aller Bauelemente, so dass beispielsweise bei einer Leistung von ca. drei Korpussen pro Minute eine hohe Variantenvielfalt gefertigt werden kann. Dabei können auch Baugruppen gefügt werden, welche keiner Standardkonstruktion zuzuordnen sind. Dies sind bei der Möbelfertigung beispielsweise Korpusse mit Mittelpfosten, Mittelseiten, Frontblenden oder Traversen an untypischen Positionen.

Ein "Bearbeitungsbereich" der Fügepresse ist dabei ein Bereich der Fügepresse, in dem ein Fügevorgang durchgeführt wird. Insbesondere ist ein Bearbeitungsbereich der Fügepresse zumindest teilweise zwischen einem Oberdruck und einem Tisch der Fügepresse gelegen.

Es ist vorgesehen, dass die erste Handhabungseinrichtung eingerichtet ist, zumindest ein Bauelement in den Bearbeitungsbereich der Fügepresse oder in einen benachbart zum Bearbeitungsbereich der Fügepresse gelegenen Bereich zu bewegen, und/oder dass die zweite Handhabungseinrichtung eingerichtet ist, zumindest ein Bauelement in den Bearbeitungsbereich der Fügepresse oder in einen benachbart zum Bearbeitungsbereich der Fügepresse gelegenen Bereich zu bewegen.

Insbesondere kann die zweite Handhabungseinrichtung das Bauelement, bevorzugt eine Rückwand, an eine Zustellvorrichtung der Fügepresse, insbesondere eine Schwenkvorrichtung der Fügepresse, übergeben werden, wobei die Zustellvorrichtung das Bauelement in den Bearbeitungsbereich bewegt, insbesondere schwenkt. Zusätzlich kann die zweite Handhabungseinrichtung eingerichtet sein, ein Bauelement, insbesondere eine Seitenwand, an eine Aufnahmeeinrichtung eines Oberdrucks der Fügepresse zu übergeben. Die Aufnahmeeinrichtung kann dabei von einem zum Bearbeitungsbereich benachbarten Bereich in den Bearbeitungsbereich bewegbar sein.

Insbesondere wird die Aufnahmeeinrichtung des Oberdrucks zur Übernahme eines Bauelements von der zweiten Handhabungseinrichtung zu in Richtung einer ersten Zuführeinrichtung weisenden Abschnitten der Schienen bewegt.

Es ist bevorzugt, dass die erste Handhabungseinrichtung und/oder die zweite Handhabungseinrichtung zumindest ein Bauelement aufnehmen und halten kann. Insbesondere umfasst die erste Handhabungseinrichtung und/oder die zweite Handhabungseinrichtung einen Roboter oder Roboterarm.

Es ist bevorzugt, dass die erste Seite und die zweite Seite der Fügepresse entgegengesetzte Seiten sind, wobei eine Förderrichtung von Bauelementen durch die Fügepresse von einer dritten Seite zu einer vierten Seite der Fügepresse verläuft. Somit können mit den Handhabungseinrichtungen Bauelemente seitlich der Fügepresse zugeführt werden.

Gemäß einer Ausführungsform umfasst die Fügeeinrichtung eine erste Zuführeinrichtung, die derart angeordnet ist, dass Bauelemente direkt in die Fügepresse gefördert werden können. Somit werden Bauelemente von der ersten Zuführeinrichtung zur Fügepresse übergeben. Hierzu kann die erste Zuführeinrichtung beispielsweise einen Rollenförderer aufweisen, der die Bauelemente entsprechend an die Fügepresse übergibt.

Dabei ist es bevorzugt, dass die erste Zuführeinrichtung an einer dritten Seite der Fügepresse vorgesehen ist, wobei die dritte Seite zwischen der ersten und zweiten Seite der Fügepresse vorgesehen ist. Somit ist es möglich, mit den Handhabungseinrichtungen Bauelemente von der ersten und zweiten Seite zuzuführen, wohingegen die erste Zuführeinrichtung Bauelemente von der dritten Seite in die Fügepresse fördert. Dies ermöglicht eine besonders hohe Taktzahl.

Gemäß einer weiteren Ausführungsform ist es vorgesehen, dass die Fügeeinrichtung eine zweite Zuführeinrichtung aufweist, die derart angeordnet ist, dass die zweite Handhabungseinrichtung ein von der zweiten Zuführeinrichtung bereitgestelltes Bauelement übernehmen und in den Bearbeitungsbereich der Fügepresse bewegen kann. Somit können Bauelemente vereinzelt zugeführt und für die Übernahme durch die zweite Handhabungseinrichtung bereitgestellt werden.

Gemäß einer weiteren Ausführungsform umfasst die Fügeeinrichtung eine dritte Zuführeinrichtung, die derart angeordnet ist, dass die erste Handhabungseinrichtung ein von der dritten Zuführeinrichtung bereitgestelltes Bauelement übernehmen, und in den Bearbeitungsbereich der Fügepresse bewegen kann. Auf diese Weise können Bauelemente vereinzelt zugeführt und entsprechend für die Übergabe durch die erste Handhabungseinrichtung bereitgestellt werden.

Alternativ oder zusätzlich kann es vorgesehen sein, dass die Fügeeinrichtung eine vierte Zuführeinrichtung und/oder eine fünfte Zuführeinrichtung umfasst, die derart angeordnet ist/sind, dass die erste Handhabungseinrichtung von der vierten und/oder fünften Zuführeinrichtung bereitgestellte Bauelemente übernehmen und in den Bearbeitungsbereich der Fügepresse bewegen kann. Somit können weitere, bevorzugt unterschiedliche, Bauelemente zugeführt werden, die wiederum durch die erste Handhabungseinrichtung übergeben werden können. Auf diese Weise kann die Flexibilität der Fügeeinrichtung weiter gestaltet werden. Dabei ist es bevorzugt, dass die Zuführeinrichtungen für unterschiedliche Bauelemente ausgestaltet sind.

Ferner kann es vorgesehen sein, dass die erste Handhabungseinrichtung und/oder die zweite Handhabungseinrichtung als Mehrachs-Roboter, insbesondere als Sechs-Achs-Roboter ausgebildet ist/sind. Mit einem Mehrachs-Roboter können komplette Bewegungsvorgänge ausgeführt werden. Bspw. ist es möglich, ein plattenförmiges Bauelement an eine Halteeinrichtung der Fügepresse zu übergeben oder ein Bauelement während eines Fügevorgangs zu halten. Auf diese Weise können auch Sonderbauelemente für einen Fügevorgang eingesetzt werden.

Ferner kann es vorgesehen sein, dass die erste Handhabungseinrichtung und/oder die zweite Handhabungseinrichtung mehrere Greifeinrichtungen oder einen Multifunktionsgreifer aufweist/aufweisen, der beispielsweise einen Vakuumsauger, Saugspanner, mechanischen Greifer, einen Klemmgreifer oder Ähnliches aufweist. Insbesondere sind Greifeinrichtungen der Handhabungseinrichtung(en) ausgewählt aus: einem oder mehreren Saugabschnitten, einer Klemmeinrichtung, einem Greifer, wie einer Greifzange, und einem Saugspanner. Somit können die Handhabungseinrichtungen flexibel für unterschiedliche Bauelemente und für unterschiedliche Handhabungsaufgaben eingesetzt werden.

Gemäß einer weiteren Ausführungsform ist es vorgesehen, dass die erste Handhabungseinrichtung und/oder die zweite Handhabungseinrichtung eingerichtet ist/sind, ein Bauelement während eines Fügevorgangs der Fügepresse zu halten. Somit kann die Komplexität der Fügepresse reduziert werden, da die jeweilige Handhabungseinrichtung in den Fügevorgang eingezogen wird.

Ferner kann es vorgesehen sein, dass die Fügepresse eine Fördereinrichtung mit einer Förderrichtung von einer dritten Seite zu einer vierten Seite der Fügepresse aufweist. Somit wird eine Förderrichtung definiert, zu der die Handhabungseinrichtungen jeweils seitlich ein Bauelement zuführen können. Dadurch wird eine besonders hohe Taktzeit bei gleichzeitig hoher Flexibilität der Fügeeinrichtung gewährleistet.

Gemäß einer weiteren Ausführungsform kann die Fügepresse eine Schwenkvorrichtung zur Aufnahme eines von der zweiten Handhabungsvorrichtung bereitgestellten Bauelements, insbesondere einer Rückwand eines Korpus, und/oder eine erste Halteeinrichtung sowie eine zweite Halteeinrichtung umfassen, wobei die erste Halteeinrichtung und die zweite Halteeinrichtung jeweils eingerichtet sind, ein stehendes Bauelement zu halten. Das Halten des stehenden Bauelements kann vor oder während eines Verpressens der Baugruppe erfolgen. Dabei kann es sich bei den Bauelementen, die mittels der ersten und/oder zweiten Halteeinrichtung gehalten werden, um Korpus-Bauelemente handeln.

Es wird eine Fügeeinrichtung bereitgestellt, umfassend: eine Fügepresse, die eingerichtet ist, Bauelemente zu einer Baugruppe zu fügen, wobei die Fügepresse eine erste Seite sowie eine zweite Seite aufweist, wobei die erste Seite und die zweite Seite unterschiedliche, insbesondere entgegengesetzte, Seiten der Fügepresse sind, und eine erste Handhabungseinrichtung, die eingerichtet ist, zumindest ein Bauelement von der ersten Seite der Fügepresse zur Fügepresse zu bewegen, wobei die erste Handhabungseinrichtung eingerichtet ist, zumindest zwei Bauelemente aufzunehmen.

Die Fügeeinrichtung gemäß dieser Zielrichtung kann gemäß weiteren Ausführungsformen eines oder mehrere Merkmale gemäß den zuvor aufgeführten Aspekten aufweisen. Beispielsweise kann die Fügeeinrichtung gemäß dieser Zielrichtung eine zweite Handhabungseinrichtung aufweisen, die eingerichtet ist, zumindest ein weiteres Bauelement von der zweiten Seite der Fügepresse zum Bearbeitungsbereich der Fügepresse zu bewegen.

Gemäß noch einer weiteren Zielrichtung wird eine Fügeeinrichtung bereitgestellt, die aufweist: eine Fügepresse, die eingerichtet ist, Bauelemente zu einer Baugruppe zu fügen, wobei die Fügepresse eine erste Seite sowie eine zweite Seite aufweist, wobei die erste Seite und die zweite Seite unterschiedliche, insbesondere entgegengesetzte, Seiten der Fügepresse sind, und eine erste Handhabungseinrichtung, die eingerichtet ist, zumindest ein Bauelement von der ersten Seite der Fügepresse zur Fügepresse zu bewegen, wobei die erste Handhabungseinrichtung eine Greifeinrichtung mit mehreren Aufnahmeabschnitten zur Aufnahme von Bauelementen aufweist.

Die Fügeeinrichtung gemäß dieser Zielrichtung kann gemäß weiteren Ausführungsformen eines oder mehrere Merkmale gemäß den zuvor aufgeführten Aspekten aufweisen. Beispielsweise kann die Fügeeinrichtung gemäß dieser Zielrichtung eine zweite Handhabungseinrichtung aufweisen, die eingerichtet ist, zumindest ein weiteres Bauelement von der zweiten Seite der Fügepresse zum Bearbeitungsbereich der Fügepresse zu bewegen.

Ferner wird ein Verfahren zum Fügen einer Baugruppe aus mehreren Bauelementen unter Einsatz einer Fügepresse bereitgestellt. Das Verfahren umfasst die folgenden Schritte: Zuführen eines Bauelements mittels einer ersten Handhabungseinrichtung zu einer ersten Seite der Fügepresse, insbesondere in einen Bearbeitungsbereich der Fügepresse, und, Zuführen eines weiteren Bauelements mittels einer zweiten Handhabungseinrichtung zu einer zweiten Seite der Fügepresse zu einem Bearbeitungsbereich der Fügepresse, wobei die erste Seite und die zweite Seite unterschiedliche, insbesondere entgegengesetzte, Seiten der Fügepresse sind.

Im Rahmen des Verfahrens kann insbesondere eine Fügeeinrichtung gemäß einer der zuvor beschriebenen Aspekte zum Einsatz kommen.

Mit dem Verfahren kann insbesondere ein Möbelstück, beispielsweise ein Möbel-Korpus, gefertigt werden. Somit kann die Flexibilität bei einer Fertigung eines Möbelstücks gesteigert werden.

Es ist bevorzugt, dass die erste Seite und die zweite Seite der Fügepresse entgegengesetzte Seiten sind, wobei eine Förderrichtung von Bauelementen durch die Fügepresse von einer dritten Seite zu einer vierten Seite der Fügepresse verläuft. Somit können mit den Handhabungseinrichtungen Bauelemente seitlich der Fügepresse zugeführt werden.

Gemäß einer Ausführungsform des Verfahrens wird der Fügepresse mittels einer ersten Zuführeinrichtung ein Bauelement von einer dritten Seite der Fügepresse zugeführt. Somit können die von der ersten Handhabungseinrichtung von einer ersten Seite der Fügepresse in einen Bearbeitungsbereich und von der zweiten Handhabungseinrichtung von einer zweiten Seite der Fügepresse in einen Bearbeitungsbereich der Fügepresse zugeführten Bauelemente entsprechend vereint und gefügt werden.

Ferner kann es vorgesehen sein, dass die erste Handhabungseinrichtung und/oder die zweite Handhabungseinrichtung ein Bauelement während eines Fügevorgangs der Fügepresse halten. Auf diese Weise können auch Sonderbauelemente für einen Fügevorgang eingesetzt und damit die Flexibilität gesteigert werden.

Gemäß einer weiteren Ausführungsform ist eine Förderrichtung von einer dritten Seite zu einer vierten Seite der Fügepresse vorgesehen. In der Förderrichtung wird die in der Fügepresse gefügte Baugruppe bewegt. Somit kann ein hoher Durchsatz gewährleistet werden.

### Kurze Beschreibung der Zeichnungen

Weitere Merkmale und Vorteile einer Fügeeinrichtung sowie eines Verfahrens gemäß der Erfindung ergeben sich aus der nachfolgenden Beschreibung unter Bezugnahme auf die beiliegenden Zeichnungen.

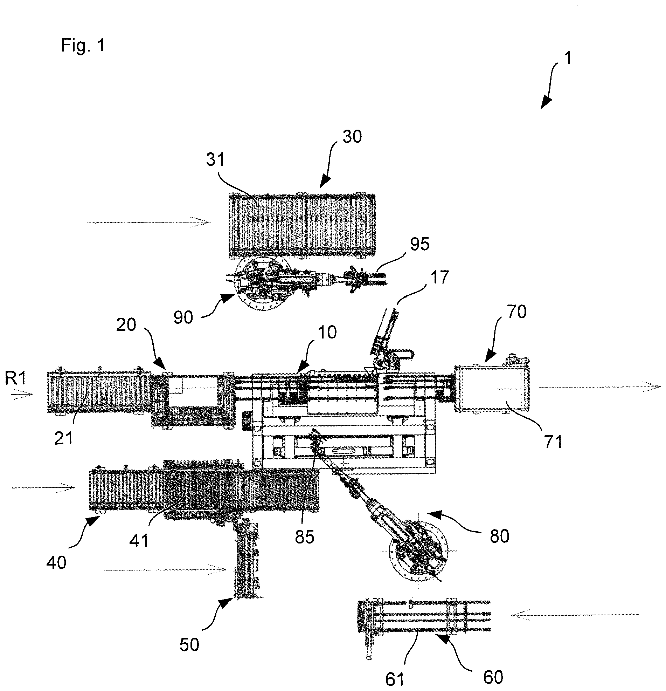

- Fig. 1: ist eine Draufsicht auf eine Fügeeinrichtung gemäß einer Ausführungsform der Erfindung.
- Fig. 2: zeigt eine perspektivische Ansicht der in Fig. 1 dargestellten Fügeeinrichtung.
- Fig. 3: zeigt eine Fügepresse der in den Figuren 1-2 dargestellten Fügeeinrichtung.

### Beschreibung von Ausführungsformen

Gleiche Bezugszeichen, die in verschiedenen Figuren aufgeführt sind, benennen identische, einander entsprechende, oder funktionell ähnliche Elemente.

Eine Fügeeinrichtung 1 zur Fertigung eines mehrere Bauelemente umfassenden Produkts (in diesem Beispiel eines Möbelstücks/Möbelkorpus) weist eine Fügepresse 10 auf, die eingerichtet ist, mehrere zur Verfügung gestellte Bauelemente zu fügen und zu verpressen. Die Bauelemente sind dabei mit Verbindungselementen ausgestattet, insbesondere mit Stiften, Holzdübeln, Flachdübeln, Vorsprüngen oder Ähnlichem, die in entsprechende Aussparungen eines benachbarten Bauelements eindringen können. Ein Verpressen der Bauelemente kann unter Einsatz eines Haftmittels erfolgen, um eine dauerhafte Verbindung herbeizuführen.

Die Fügeeinrichtung 1 umfasst eine erste Zuführeinrichtung 20, eine zweite Zuführeinrichtung 30, eine dritte Zuführeinrichtung 40, eine vierte Zuführeinrichtung 50, eine fünfte Zuführeinrichtung 60 sowie eine Abtransporteinrichtung 70. Die Zuführeinrichtungen sind jeweils eingerichtet, Bauelemente zuzuführen, sodass die jeweiligen Bauelemente der Fügepresse 10 übergeben und durch die Fügepresse gefügt und verpresst werden können. Mittels der Abtransporteinrichtung 70 wird die gefügte Baugruppe von der Fügepresse 10 abtransportiert.

Die erste Zuführeinrichtung 20, die zum Bereitstellen von Seitenelementen eines Möbelstücks eingerichtet ist, ist derart angeordnet, dass die Bauelemente ohne Richtungsänderung in die Fügepresse 10 gefördert werden können. Die erste Zuführeinrichtung 20 umfasst zum vereinzelten Bereitstellen der Seitenelemente einen Rollenförderer 21, der die Seitenelemente in einer Förderrichtung R1 bewegt.

Die zweite Zuführeinrichtung 30 ist an einer ersten Seite der Fügepresse 10 und beabstandet zu dieser angeordnet. Die zweite Zuführeinrichtung 30 weist einen Rollenförderer 31 auf, der derart angeordnet ist, dass die durch den Rollenförderer 31 bewegten Bauelemente, die im Ausführungsbeispiel Rückwände der zu fertigenden Möbelstücke sind, wie nachfolgend näher erläutert der Fügepresse 10 übergeben werden können.

Die zweite Zuführeinrichtung 30 stellt mit dem Rollenförderer 31 eine Förderbewegung in einer Richtung bereit, die parallel zu derjenigen der ersten Zuführeinrichtung 20 ausgerichtet ist. Allerdings ist die zweite Zuführeinrichtung 30 derart beabstandet zur ersten Zuführeinrichtung 20 sowie zur Fügepresse 10 angeordnet, dass zwischen der zweiten Zuführeinrichtung 30 einerseits und der ersten Zuführeinrichtung 20 und der Fügepresse 10 andererseits ein Freiraum vorliegt.

Die Fügeeinrichtung 1 umfasst ferner die dritte Zuführeinrichtung 40, die, ähnlich wie die erste Zuführeinrichtung 20 und die zweite Zuführeinrichtung 30, einen Rollenförderer 41 zum Bewegen und Bereitstellen von einzelnen Bauelementen aufweist. Im Ausführungsbeispiel sind die durch die dritte Zuführeinrichtung 40 bereitgestellten Bauelemente Böden der zu fertigenden Möbelstücke. Die durch den Rollenförderer 41 vorgegebene Bewegungsrichtung ist parallel zu derjenigen der ersten Zuführeinrichtung 20.

Die dritte Zuführeinrichtung 40 ist, zumindest abschnittweise, an einer zweiten Seite der Fügepresse 10 angeordnet, wobei die zweite Seite in eine entgegengesetzte Richtung weist, als die erste Seite der Fügepresse 10. Somit erstreckt sich die dritte Zuführeinrichtung 40 abschnittsweise parallel zur ersten Zuführeinrichtung 20 sowie abschnittsweise benachbart zur Fügepresse 10.

Zum Bereitstellen von weiteren Bauelementen, insbesondere Traverleisten, umfasst die Fügeeinrichtung 1 die vierte Zuführeinrichtung 50, die benachbart zur dritten Zuführeinrichtung 40 an der von der Fügepresse 10 wegweisenden Seite angeordnet ist.

Zum Bereitstellen von weiteren Bauelementen, insbesondere Mittelpfosten für die zu fertigenden Möbelstücke, ist in der Ausführungsform ferner die fünfte Zuführeinrichtung 60 vorgesehen, die diese Bauelemente in einer zu den Förderrichtungen der ersten bis vierten Zuführeinrichtung entgegengesetzten Richtung bereitstellt. Die fünfte Zuführeinrichtung 60 umfasst hierzu einen Riemenförderer 61.

In dem Bereich zwischen der fünften Zuführeinrichtung 60 und der Fügepresse 10 ist eine erste Handhabungseinrichtung 80 angeordnet, die eingerichtet ist, zumindest ein Bauelement von der dritten Zuführeinrichtung 40, der vierten Zuführeinrichtung 50, oder der fünften Zuführeinrichtung 60 zu übernehmen und in den Bereich der Fügepresse 10 zu bewegen und das Bauelement zu übergeben. Die erste Handhabungseinrichtung 80 ist dabei als Mehrachsroboter ausgebildet, der mit einer Greifeinrichtung 85 zum Aufnehmen und Übergeben eines entsprechenden Bauelements vorgesehen ist.

Die Greifeinrichtung 85 ist als Multifunktionsgreifer ausgebildet und umfasst Saugabschnitte 85a, um ein plattenförmiges Bauelement, wie beispielsweise eine Traverleiste, von der vierten Zuführeinrichtung 50 aufzunehmen. Ferner umfasst die Greifeinrichtung 85 eine Klemmeinrichtung 85b, um ein plattenförmiges Bauelement, wie beispielsweise einen Boden, von der dritten Zuführeinrichtung 40 aufzunehmen.

In einem Bereich zwischen der zweiten Zuführeinrichtung 30 und der Fügepresse 10 ist eine zweite Handhabungseinrichtung 90 angeordnet, die eingerichtet ist, ein Bauelement von der zweiten Zuführeinrichtung 30 aufzunehmen und im Bereich der Fügepresse 10 zu übergeben. Die zweite Handhabungseinrichtung 90 ist als Mehrachsroboter ausgebildet, der eine zweite Greifeinrichtung 95 aufweist.

Die zweite Handhabungseinrichtung 90 ist insbesondere eingerichtet, ein Bauelement (insbesondere ein Seitenteil) von der ersten Zuführeinrichtung 20 zu übernehmen und an einen bewegbaren Oberdruck 12 der Fügepresse 10 zu übergeben, und die zweite Handhabungseinrichtung 90 ist eingerichtet, ein weiteres Bauelement (insbesondere eine Rückwand) von der zweiten Zuführeinrichtung 30 zu übernehmen und an eine Schwenkvorrichtung 17 der Fügepresse 10 zu übergeben.

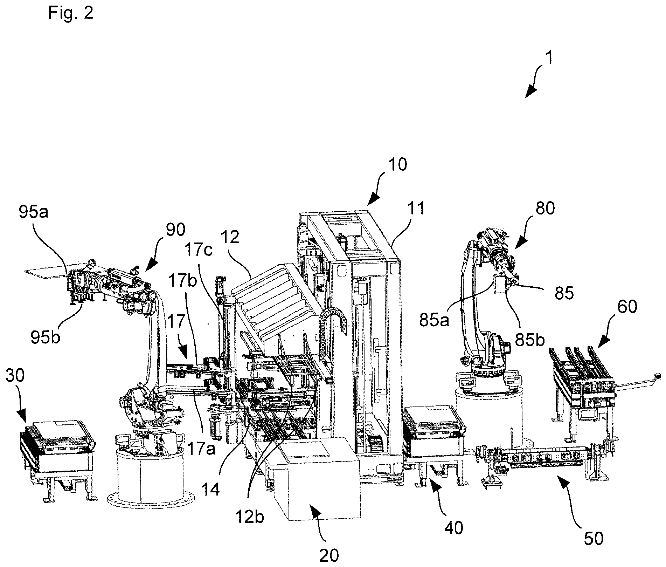

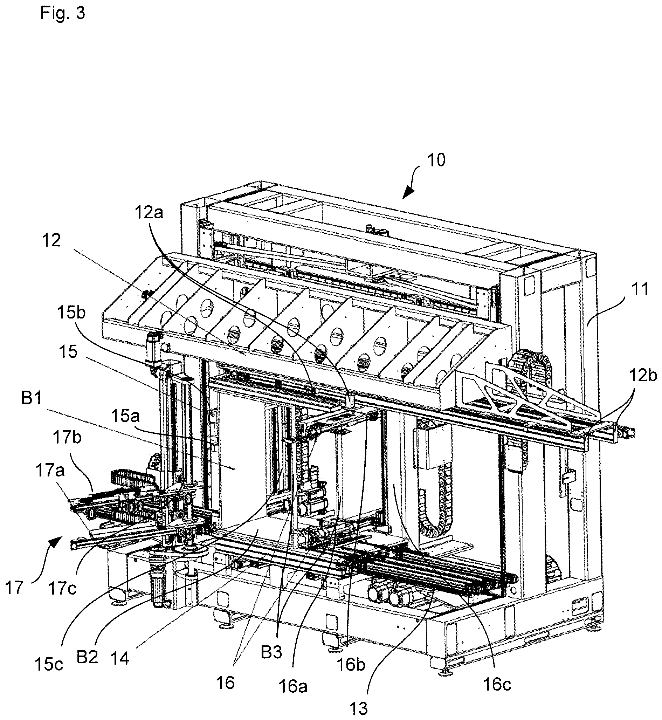

Der Oberdruck 12 weist hierzu eine Aufnahmeeinrichtung 12a auf, die entlang von Schienen 12b des Oberdrucks in einen Bearbeitungsbereich bewegbar ist. In Figuren 2-3 wurde die Aufnahmeeinrichtung 12a bereits in den Bearbeitungsbereich verfahren. Zur Übernahme eines Bauelements von der zweiten Handhabungseinrichtung 90 wird die Aufnahmeeinrichtung 12a zu den auskragenden Abschnitten der Schienen 12b bewegt.

Die Greifeinrichtung 95 ist hierfür als Multifunktionsgreifer ausgebildet und umfasst einen Greifer 95a, um ein plattenförmiges Bauelement, insbesondere eine von der ersten Zuführeinrichtung 20 bereitgestellte Seitenwand, aufzunehmen und an den Oberdruck 12 zu übergeben. Eine weitere mit der ersten Zuführeinrichtung 20 bereitgestellte Seitenwand kann mittels der ersten Zuführeinrichtung 20 weiter zur Fügepresse 10 bewegt werden. Ferner umfasst die Greifeinrichtung 95 Saugspanner 95b, um ein plattenförmiges Bauelement, insbesondere eine Rückwand, von der zweiten Zuführeinrichtung 30 aufzunehmen und an die Schwenkvorrichtung 17 der Fügepresse 10 zu übergeben.

Zum Abtransport der mit der Fügepresse 10 gefertigten Möbelkonstruktionen ist die Abtransporteinrichtung 70 an einer zur ersten Zuführeinrichtung 20 entgegengesetzten Seite der Fügepresse 10 angeordnet. Die Abtransporteinrichtung 70 weist einen Bandförderer 71 auf, mit dem die gefügten Möbelstücke von der Fügepresse 10 weg bewegt werden können.

Nachfolgend wird die Fügepresse 10 der Fügeeinrichtung 1 beschrieben.

Die Fügepresse 10 umfasst einen Maschinenständer 11, an dem der in vertikaler Richtung bewegbare Oberdruck 12 angebracht ist. Der Oberdruck 12 umfasst eine Aufnahmeeinrichtung zum Aufnehmen eines Bauelements (insbesondere Seitenwand), wobei die Aufnahmeeinrichtung entlang des Oberdrucks 12 bewegbar ist.

Ferner umfasst die Fügepresse 10 eine Fördereinrichtung 13, die als Riemenförderer ausgebildet ist, um ein oder mehrere Bauelemente, die von der ersten Zuführeinrichtung 20 bereitgestellt werden, in einen Bearbeitungsbereich der Fügepresse 10 zu bewegen. Im Bearbeitungsbereich der Fügepresse 10 ist ein Tisch 14 angeordnet, der beim Verpressen einer Baugruppe das mit der Fördereinrichtung 13 zugeführte Bauelement B2 (Seitenelement) hält oder abstützt.

Zwischen Oberdruck 12 und dem Tisch 14 sind eine erste Halteeinrichtung 15 sowie eine zweite Halteeinrichtung 16 vorgesehen, die eingerichtet sind, stehende Werkstücke zu halten, bevor und während die Baugruppe verpresst wird.

Die erste Halteeinrichtung 15 weist hierzu einen ersten Haltearm 15a und einen zweiten Haltearm 15b auf, die mit Saugeinrichtungen ausgestattet sind und ein Bauelement B1 (hier ein Boden) stehend halten. Die Haltearme 15a, 15b sind an einem ersten Halter 15c angebracht und entlang des Halters 15b in vertikaler Richtung bewegbar. Somit kann die erste Halteeinrichtung 15 durch Änderung des Abstands der Haltearme 15a an die Größe des zu haltenden Bauelements (hier: Bauelement B1) angepasst werden. Ferner ist die erste Halteeinrichtung 15 in und entgegen der Förderrichtung R1 entlang des Maschinenständers 11 verfahrbar.

Die zweite Halteeinrichtung 16 ist, in der Förderrichtung R1, beabstandet zur ersten Halteeinrichtung 15 vorgesehen. Die zweite Halteeinrichtung 16 umfasst Haltearme 16a, 16b, die an einem zweiten Halter 16c angebracht und entlang des zweiten Halters 16c in vertikaler Richtung bewegbar sind, um Bauelemente B3 (Traverleisten) zwischen den Haltearmen 16a, 16b einzuklemmen und somit stehend zu halten. Der zweite Halter 16c ist in und entgegen der Förderrichtung R1 entlang des Maschinenständers 11 verfahrbar.

Auf Grund der Bewegbarkeit der ersten Halteeinrichtung 15 und der zweiten Halteeinrichtung 16 kann ein Abstand zwischen der ersten Halteeinrichtung 15 und der zweiten Halteeinrichtung 16 variiert werden.

Obwohl gemäß der Ausführungsform eine Bewegbarkeit der ersten Halteeinrichtung 15 und der zweiten Halteeinrichtung 16 in und entgegen der Förderrichtung R1 entlang des Maschinenständers 11 beschrieben wurde, kann es gemäß einer Modifikation auch vorgesehen sein, dass einer der Halteeinrichtungen 15, 16 relativ zum Maschinenständer 11 bewegbar und die jeweils andere Halteeinrichtung 15, 16 stationär am Maschinenständer 11 angebracht sein kann.

Ferner umfasst die Fügepresse 10 die Schwenkvorrichtung 17, die eingerichtet ist, ein Bauelement (hier: Rückwand) aufzunehmen und in einer Schwenkbewegung in einen Bereich oberhalb des Tisches 14 und damit oberhalb eines am Tisch 14 bereitgestellten Bauelements zuzuführen.

Die Schwenkvorrichtung umfasst einen ersten Aufnahmearm 17a, einen zweiten Aufnahmearm 17b sowie ein Gelenk 17c, an dem der erste Aufnahmearm 17a und der zweite Aufnahmearm 17b angebracht sind. Der erste Aufnahmearm 17a und der zweite Aufnahmearm 17b können jeweils unabhängig voneinander entlang des Gelenks 17c bewegt und somit variabel zueinander beabstandet werden. Somit ist es möglich, unterschiedlich große Bauelemente aufzunehmen.

Nachfolgend soll ein beispielhafter Verfahrensablauf zum Fügen einer Baugruppe beschrieben werden. Hierzu wird zunächst mittels der dritten Zuführeinrichtung 40 zugeführt, sodass dieses Bauelement mit der Greifeinrichtung 85 der ersten Handhabungseinrichtung gegriffen werden kann. Die erste Handhabungseinrichtung bewegt das Bauelement in den Bereich der Fügepresse und übergibt das Bauelement der zweiten Halteeinrichtung 16.

Daraufhin wird von der ersten Handhabungseinrichtung 80 in ähnlicher Weise ein weiteres Bauelement von der dritten Zuführeinrichtung 40 übernommen und der ersten Halteeinrichtung 15 übergeben. Somit sind die der Fügepresse 10 zugeführten Bauelemente stehend ausgerichtet.

Parallel zu einem der bereits beschriebenen Verfahrensschritte oder nachfolgend zu einem oder mehreren dieser Verfahrensschritte wird mittels der ersten Zuführeinrichtung 20 ein Bauelement in der Förderrichtung R1 in die Fügepresse 10 zugeführt und so angeordnet, dass die erste und zweite Halteeinrichtung 15, 16 die jeweiligen Bauelemente oberhalb dieses horizontal ausgerichteten Bauelements anordnen oder durch eine weitere Bewegung der ersten oder zweiten Halteeinrichtung 15, 16, angeordnet werden.

Ferner wird, parallel zu einem der bereits beschriebenen Verfahrensschritte oder nachfolgend zu einem oder mehreren dieser Verfahrensschritte, mit der zweiten Handhabungseinrichtung 90 ein Bauelement von der ersten Zuführeinrichtung 20 übernommen, indem dieses Bauelement (insbesondere Seitenwand) durch die Greifeinrichtung 95 gegriffen wird. Die zweite Handhabungseinrichtung 90 übergibt das Bauelement der Aufnahmeeinrichtung 12a des Oberdrucks 12 der Fügepresse 10. Nachfolgend wird die Aufnahmeeinrichtung 12a des Oberdrucks 12 in der Förderrichtung R1 in den Bearbeitungsbereich der Fügepresse 10 bewegt.

Ferner übernimmt die zweite Handhabungseinrichtung 90 ein weiteres Bauelement (insbesondere Rückwand) von der zweiten Zuführeinrichtung 30 und übergibt dieses der Schwenkvorrichtung 17, die, nachdem die zweite Handhabungseinrichtung 90 das Bauelement an die Schwenkvorrichtung 17 übergeben hat, das Bauelement in den Bearbeitungsbereich der Fügepresse 10 durch eine Drehbewegung zustellt.

Parallel oder zusätzlich kann bei Bedarf von der ersten Handhabungsvorrichtung 80 ein weiteres Bauelement übernommen und in einen Bereich zwischen der ersten Halteeinrichtung 15 und der zweiten Halteeinrichtung 16 gehalten werden. Daraufhin wird der Oberdruck in einer vertikalen Richtung nach unten bewegt und somit die Bauelemente zu einer Baugruppe verpresst. Diese Baugruppe kann nachfolgend in Richtung der Abtransporteinrichtung 70 bewegt und entsprechend von der Fügepresse entfernt werden.

Auch wenn im Rahmen der Ausführungsform beschrieben wird, dass die Fügeeinrichtung zum Fügen eines Möbelstücks oder Möbelkorpus, beispielsweise eines Küchenelement-Korpus, eingesetzt wird, kann die Fügeeinrichtung auch zum Fügen anderer Baugruppen verwendet werden.

Es ist ersichtlich, dass einzelne, jeweils in verschiedenen Ausführungsformen beschriebene Merkmale auch in einer einzigen Ausführungsform umgesetzt werden können, sofern sie nicht strukturell inkompatibel sind. Gleichermaßen können verschiedene Merkmale, die im Rahmen einer einzelnen Ausführungsform beschrieben sind, auch in mehreren Ausführungsformen einzeln oder in jeder geeigneten Unterkombination vorgesehen sein.

## Patentansprüche

1. Fügeeinrichtung (1), umfassend
eine Fügepresse (10), die eingerichtet ist, in einem Bearbeitungsbereich Bauelemente zu einer Baugruppe zu fügen, wobei die Fügepresse (10) eine erste Seite sowie eine zweite Seite aufweist, wobei die erste Seite und die zweite Seite entgegengesetzte Seiten der Fügepresse (10) sind,
eine erste Handhabungseinrichtung (80), die eingerichtet ist, zumindest ein Bauelement zur ersten Seite der Fügepresse (10) zu bewegen, und
eine zweite Handhabungseinrichtung (90), die eingerichtet ist, zumindest ein weiteres Bauelement zur zweiten Seite der Fügepresse (10) zum Bearbeitungsbereich der Fügepresse (10) zu bewegen,
wobei die erste Handhabungseinrichtung (80) und/oder die zweite Handhabungseinrichtung (90) eingerichtet ist/sind, ein Bauelement während eines Fügevorgangs der Fügepresse (10) zu halten, **gekennzeichnet, dadurch dass**
die erste Handhabungseinrichtung (80) und die zweite Handhabungseinrichtung (90) als Mehrachsroboter ausgebildet sind.

2. Fügeeinrichtung (1) gemäß Anspruch 1, wobei die zweite Handhabungseinrichtung (90) eingerichtet ist, ein erstes Bauelement an eine zum Bearbeitungsbereich bewegbare Aufnahmeeinrichtung (12a) eines Oberdrucks (12) der Fügepresse (10) und ein zweites Bauelement an eine benachbart zum Bearbeitungsbereich angeordnete Zustellvorrichtung, insbesondere eine Schwenkvorrichtung (17), der Fügepresse (10) zu übergeben.

3. Fügeeinrichtung (1) gemäß einem der vorangegangenen Ansprüche, ferner umfassend eine erste Zuführeinrichtung (20), die derart angeordnet ist, ein Bauelement direkt in die Fügepresse (10) zu fördern.

4. Fügeeinrichtung (1) gemäß einem der vorangegangenen Ansprüche, ferner umfassend eine zweite Zuführeinrichtung (30), die derart angeordnet ist, dass die zweite Handhabungseinrichtung (90) ein von der zweiten Zuführeinrichtung (30) bereitgestelltes Bauelement übernehmen und zur Fügepresse (10) bewegen kann.

5. Fügeeinrichtung (1) gemäß einem der vorangegangenen Ansprüche, ferner umfassend eine dritte Zuführeinrichtung (40), die derart angeordnet ist, dass die erste Handhabungseinrichtung (80) ein von der dritten Zuführeinrichtung (40) bereitgestelltes Bauelement übernehmen und in den Bearbeitungsbereich der Fügepresse (10) bewegen kann,
wobei ferner bevorzugt ist, dass die Fügeeinrichtung (10) eine vierte Zuführeinrichtung (50) und/oder eine fünfte Zuführeinrichtung (60) umfasst, die derart angeordnet ist/sind, dass die erste Handhabungseinrichtung (80) ein von der vierten und/oder fünften Zuführeinrichtung (50, 60) bereitgestelltes Bauelement übernehmen und in den Bearbeitungsbereich der Fügepresse (10) bewegen kann.

6. Fügeeinrichtung (1) gemäß einem der vorangegangenen Ansprüche, wobei die erste Handhabungseinrichtung (80) und die zweite Handhabungseinrichtung (90) als 6-Achs-Roboter ausgebildet sind.

7. Fügeeinrichtung (1) gemäß einem der vorangegangenen Ansprüche, wobei die erste Handhabungseinrichtung (80) und/oder die zweite Handhabungseinrichtung (90) mehrere Greifeinrichtungen aufweist/aufweisen,
insbesondere ausgewählt aus einem oder mehreren Saugabschnitten (85a), einer Klemmeinrichtung (85b), einem Greifer (95a) und einem Saugspanner (95b).

8. Fügeeinrichtung (1) gemäß einem der vorangegangenen Ansprüche, wobei die Fügepresse (10) eine Fördereinrichtung (13) mit einer Förderrichtung (R1) von einer dritten Seite zu einer vierten Seite der Fügepresse (10) aufweist.

9. Fügeeinrichtung (1) gemäß einem der vorangegangenen Ansprüche, wobei die Fügepresse (10) eine Zustellvorrichtung, insbesondere eine Schwenkvorrichtung (17), zur Aufnahme eines von der zweiten Handhabungseinrichtung (90) bereitgestellten Bauelements aufweist, und/oder eine
erste Halteinrichtung (15) sowie eine zweite Halteeinrichtung (16) aufweist, die eingerichtet sind, ein stehendes Bauelement zu halten, bevor und während die Baugruppe verpresst wird.

10. Verfahren zum Fügen einer Baugruppe aus mehreren Bauelementen unter Einsatz einer Fügepresse (10), umfassend die Schritte:
Zuführen eines Bauelements mittels einer ersten Handhabungseinrichtung (80) zu einer ersten Seite der Fügepresse (10), und
Zuführen eines weiteren Bauelements mittels einer zweiten Handhabungseinrichtung (90) zu einer zweiten Seite der Fügepresse (10) zu einem Bearbeitungsbereich der Fügepresse (10), wobei die erste Seite und die zweite Seite entgegengesetzte Seiten der Fügepresse (10) sind,
wobei die erste Handhabungseinrichtung (80) und/oder die zweite Handhabungseinrichtung (90) ein Bauelement während eines Fügevorgangs der Fügepresse (10) halten, und
wobei die erste Handhabungseinrichtung (80) und die zweite Handhabungseinrichtung (90) als Mehrachsroboter ausgebildet sind.

11. Verfahren gemäß Anspruch 10, wobei die zweite Handhabungseinrichtung (90) ein erstes Bauelement an eine Aufnahmeeinrichtung eines Oberdrucks (12) der Fügepresse (10) und ein zweites Bauelement an eine Zustellvorrichtung, insbesondere eine Schwenkvorrichtung (17), der Fügepresse (10) übergibt.

12. Verfahren gemäß Anspruch 10 oder 11, wobei der Fügepresse (10) mittels einer ersten Zuführeinrichtung (20) ein Bauelement von einer dritten Seite der Fügepresse (10) zugeführt wird.

13. Verfahren gemäß einem der Ansprüche 10-12, wobei die in der Fügepresse (10) gefügte Baugruppe in einer Förderrichtung (R1) von einer dritten Seite zu einer vierten Seite der Fügepresse (10) bewegt wird.

## Claims

1. A joining device (1), comprising
a joining press (10) arranged to join components to an assembly in a processing area, wherein the joining press (10) has a first side and a second side, wherein the first side and the second side being opposite sides of the joining press (10),
a first handling device (80) arranged to move at least one component to the first side of the joining press (10), and
a second handling device (90) which is arranged to move at least one further component to the second side of the joining press (10) towards the processing area of the joining press (10), wherein the first handling device (80) and/or the second handling device (90) is/are arranged to hold a component during a joining operation of the joining press (10),
**characterized in that**
the first handling device (80) and the second handling device (90) are configured as multi-axis robots.

2. The joining device (1) according to claim 1, wherein the second handling device (90) is arranged to transfer a first component to a receiving device (12a) of an upper pressure (12) of the joining press (10), which can be moved towards the processing area, and to transfer a second component to a feeding device, in particular a swivel device (17), of the joining press (10), which is disposed adjacent to the processing area.

3. The joining device (1) according to any of the preceding claims, further comprising a first feeding device (20) disposed such as to feed a component directly into the joining press (10).

4. The joining device (1) according to any of the preceding claims, further comprising a second feeding device (30) disposed such that the second handling device (90) can take over a component provided by the second feeding device (30) and move it to the joining press (10).

5. The joining device (1) according to any of the preceding claims, further comprising a third feeding device (40) disposed in such a way that the first handling device (80) can take over a component provided by the third feeding device (40) and move it into the processing area of the joining press (10),
wherein it is further preferred that the joining device (10) comprises a fourth feeding device (50) and/or a fifth feeding device (60), which is/are disposed in such that the first handling device (80) can take over a component provided by the fourth and/or fifth feeding device (50, 60) and move it into the processing area of the joining press (10).

6. The joining device (1) according to any of the preceding claims, wherein the first handling device (80) and the second handling device (90) are configured as 6-axis robots.

7. The joining device (1) according to any of the preceding claims, wherein the first handling device (80) and/or the second handling device (90) has/have a plurality of gripping devices,
in particular selected from one or more suction sections (85a), a clamping device (85b), a gripper (95a) and a suction clamp (95b).

8. The joining device (1) according to any of the preceding claims, wherein the joining press (10) has a conveying device (13) with a conveying direction (R1) from a third side to a fourth side of the joining press (10).

9. The joining device (1) according to any of the preceding claims, wherein the joining press (10) has a feeding device, in particular a swivel device (17), for receiving a component provided by the second handling device (90), and/or has a first holding device (15) and a second holding device (16) which are arranged to hold a stationary component before and during the assembly is pressed.

10. A method for joining an assembly of several components using a joining press (10), comprising the steps of:
feeding a component by means of a first handling device (80) to a first side of the joining press (10), and
feeding a further component by means of a second handling device (90) to a second side of the joining press (10) to a processing area of the joining press (10), wherein the first side and the second side are opposite sides of the joining press (10),
wherein the first handling device (80) and/or the second handling device (90) hold a component during a joining operation of the joining press (10), and
wherein the first handling device (80) and the second handling device (90) are configured as multi-axis robots.

11. The method according to claim 10, wherein the second handling device (90) transfers a first component to a receiving device of an upper pressure (12) of the joining press (10) and a second component to a feeding device, in particular a swivel device (17), of the joining press (10).

12. The method according to claim 10 or 11, wherein a component is fed to the joining press (10) from a third side of the joining press (10) by means of a first feeding device (20).

13. The method according to any one of claims 10-12, wherein the assembly joined in the joining press (10) is moved in a conveying direction (R1) from a third side to a fourth side of the joining press (10).

## Revendications

1. Dispositif d'assemblage (1) comprenant
une presse d'assemblage (10) qui est conçue afin d'assembler dans une zone de traitement des composants pour former un ensemble, dans lequel la presse d'assemblage (10) présente un premier côté ainsi qu'un deuxième côté, dans lequel le premier côté et le deuxième côté sont des côtés opposés de la presse d'assemblage (10),
un premier dispositif de manipulation (80) qui est conçu de façon à déplacer au moins un composant vers le premier côté de la presse d'assemblage (10), et
un deuxième dispositif de manipulation (90) qui est conçu de façon à déplacer au moins un autre composant vers le deuxième côté de la presse d'assemblage (10) vers la zone de traitement de la presse d'assemblage (10), dans lequel le premier dispositif de manipulation (80) et/ou le deuxième dispositif de manipulation (90) est/sont conçu(s) de façon à maintenir un composant pendant un processus d'assemblage de la presse d'assemblage (10),
**caractérisé en ce que**
le premier dispositif de manipulation (80) et le deuxième dispositif de manipulation (90) sont réalisés sous la forme d'un robot à plusieurs axes.

2. Dispositif d'assemblage (1) selon la revendication 1, dans lequel le deuxième dispositif de manipulation (90) est conçu afin de remettre un premier composant à un dispositif de réception (12a) mobile vers la zone de traitement d'un cylindre supérieur (12) de la presse d'assemblage (10) et un deuxième composant à un dispositif d'avance agencé de manière contiguë à la zone de traitement, en particulier un dispositif de pivotement (17), de la presse d'assemblage (10).

3. Dispositif d'assemblage (1) selon l'une quelconque des revendications précédentes, comprenant de plus un premier dispositif d'alimentation (20) qui est agencé de manière à transporter directement un composant dans la presse d'assemblage (10).

4. Dispositif d'assemblage (1) selon l'une quelconque des revendications précédentes, comprenant de plus un deuxième dispositif d'alimentation (30) qui est agencé de telle manière que le deuxième dispositif de manipulation (90) puisse prendre en charge un composant fourni par le deuxième dispositif d'alimentation (30) et le déplacer vers la presse d'assemblage (10).

5. Dispositif d'assemblage (1) selon l'une quelconque des revendications précédentes, comprenant de plus un troisième dispositif d'alimentation (40) qui est agencé de telle manière que le premier dispositif de manipulation (80) puisse prendre en charge un composant fourni par le troisième dispositif d'alimentation (40) et le déplacer dans la zone de traitement de la presse d'assemblage (10),
dans lequel il est de plus préféré que le dispositif d'assemblage (10) comprenne un quatrième dispositif d'alimentation (50) et/ou un cinquième dispositif d'alimentation (60) qui est/sont agencé(s) de telle manière que le premier dispositif de manipulation (80) puisse prendre en charge un composant fourni par le quatrième et/ou le cinquième dispositif d'alimentation (50, 60) et le déplacer dans la zone de traitement de la presse d'assemblage (10).

6. Dispositif d'assemblage (1) selon l'une quelconque des revendications précédentes, dans lequel le premier dispositif de manipulation (80) et le deuxième dispositif de manipulation (90) sont réalisés comme robot à 6 axes.

7. Dispositif d'assemblage (1) selon l'une quelconque des revendications précédentes, dans lequel le premier dispositif de manipulation (80) et/ou le deuxième dispositif de manipulation (90) présente(nt) plusieurs dispositifs de préhension,
en particulier sélectionnés à partir d'une ou plusieurs sections d'aspiration (85a), d'un dispositif de serrage (85b), d'une pince (95a) et d'un élément de serrage par aspiration (95b).

8. Dispositif d'assemblage (1) selon l'une quelconque des revendications précédentes, dans lequel la presse d'assemblage (10) présente un dispositif de transport (13) avec un sens de transport (R1) d'un troisième côté à un quatrième côté de la presse d'assemblage (10).

9. Dispositif d'assemblage (1) selon l'une quelconque des revendications précédentes, dans lequel la presse d'assemblage (10) présente un dispositif d'avance, en particulier un dispositif de pivotement (17), pour la réception d'un composant fourni par le deuxième dispositif de manipulation (90) et/ou un premier dispositif de retenue (15) ainsi qu'un deuxième dispositif de retenue (16) qui sont conçus afin de retenir un composant vertical, avant et pendant que l'ensemble est pressé.

10. Procédé d'assemblage d'un ensemble à partir de plusieurs composants en utilisant une presse d'assemblage (10) comprenant les étapes suivantes :
l'amenée d'un composant au moyen d'un premier dispositif de manipulation (80) vers un premier côté de la presse d'assemblage (10) et
l'amenée d'un autre composant au moyen d'un deuxième dispositif de manipulation (90) vers un deuxième côté de la presse d'assemblage (10) vers une zone de traitement de la presse d'assemblage (10), dans lequel le premier côté et le deuxième côté sont des côtés opposés de la presse d'assemblage (10),
dans lequel le premier dispositif de manipulation (80) et/ou le deuxième dispositif de manipulation (90) retiennent un composant pendant un processus d'assemblage de la presse d'assemblage (10) et
dans lequel le premier dispositif de manipulation (80) et le deuxième dispositif de manipulation (90) sont réalisés sous la forme d'un robot à plusieurs axes.

11. Procédé selon la revendication 10, dans lequel le deuxième dispositif de manipulation (90) remet un premier composant à un dispositif de réception d'un cylindre supérieur (12) de la presse d'assemblage (10) et un deuxième composant à un dispositif d'avance, en particulier un dispositif de pivotement (17), de la presse d'assemblage (10).

12. Procédé selon la revendication 10 ou 11, dans lequel un composant est fourni depuis un troisième côté de la presse d'assemblage (10) à la presse d'assemblage (10) au moyen d'un premier dispositif d'alimentation (20).

13. Procédé selon l'une quelconque des revendications 10 à 12, dans lequel l'ensemble assemblé dans la presse d'assemblage (10) est déplacé dans un sens de transport (R1) d'un troisième côté à un quatrième côté de la presse d'assemblage (10).
